# EUROPÄISCHE PATENTSCHRIFT

(11) **EP 0 334 448 B1**
(45) Veröffentlichungstag und Bekanntmachung des Hinweises auf die Patenterteilung: **15.09.1993**
(21) Anmeldenummer: 89200697.4
(22) Anmeldetag: 20.03.1989
(51) Int. Cl.: B29C 47/92, B29C 49/04

(54) **Blasformmaschine zum Blasformen von Hohlkörpern mit Wartezeitregelung**
Blowmoulding machine for hollow articles with an adjustement of the residual volume
Machine de soufflage de corps creux comportant un réglage du volume résiduel

(30) Priorität: 24.03.1988 DE 3809856
(43) Veröffentlichungstag der Anmeldung: 27.09.1989
(73) Patentinhaber: Philips Patentverwaltung GmbH, 22335 Hamburg (DE); Philips Electronics N.V., 5621 BA Eindhoven (NL)
(72) Erfinder: Langlois, Jacques, D-3502 Vellmar (DE); Bergmann, Heinrich, D-3500 Kassel (DE); Nuhn, Wolfgang, D-3500 Kassel (DE)
(74) Vertreter: von Laue, Hanns-Ulrich, Dipl.-Ing.

(56) Entgegenhaltungen:
- EP-A- 0 004 281
- EP-A- 0 026 828
- EP-A- 0 058 297
- EP-A- 0 062 788
- DE-A- 3 416 781
- FR-A- 2 327 064
- US-A- 4 159 293
- MODERN PLASTICS INTERNATIONAL, Band 1, Nr. 9, September 1971, Seite 92; "Parison programmer and length controller"

## Beschreibung

Die Erfindung bezieht sich auf eine Blasformmaschine zum Blasformen von Hohlkörpern
mit einem Speicherkopf, der mit einem Kunststoff liefernden Extruder verbunden ist und aus dem im gefüllten Zustand ein Ausstoßkolben den Kunststoff durch eine ringspaltförmige Austrittsöffnung zur Erzeugung eines Vorformlings preßt,
mit einer Blasform zur Bildung eines Hohlkörpers aus dem Vorformling und
mit einer Steuerschaltung, die nach Abschluß eines Blasformvorganges und der Füllung des Speicherkopfes ein Kolbenstellsignal zur Regelung der Position des Ausstoßkolbens aus einem Vergleichssignal ableitet, welches aus der Differenz zwischen Istposition und Sollposition des Ausstoßkolbens gebildet ist, wobei die Sollposition durch Integration aus einem vorgegebenen Geschwindigkeitssollwertprofil ermittelt wird.

Für das Blasformen von Hohlkörpern aus thermoplastischem Kunststoff werden mittels eines Speicherkopfes schlauchförmige Vorformlinge aus dem betreffenden Kunststoffmaterial hergestellt und in einem weiteren Arbeitsgang zwischen zwei Hohlformhälften (Blasform) zur Endgröße aufgeblasen. Der Speicherkopf ist mit einem Extruder verbunden, aus dem der thermoplastische Kunststoff in den Speicherkopf gelangt. Der Speicherkopf hat eine ringspaltförmige Austrittsöffnung, die verstellbar ist. Der thermoplastische Kunststoff wird durch einen Ausstoßkolben aus der Austrittsöffnung herausgepreßt. Der dabei entstehende Vorformling wird in Abhängigkeit von der Form des zu gewinnenden Hohlkörpers ungleichmäßig gedehnt. Eine gleichmäßige Wandstärke des Hohlkörpers setzt daher eine Profilierung der Wandstärke beim Vorformling voraus (Wandstärkesollwertprofil). Dieses Wandstärkesollwertprofil des Vorformlings wird durch Verstellen der Spaltbreite der Austrittsöffnung während des Auspreßvorgangs und einer Änderung der Geschwindigkeit des Ausstoßkolbens realisiert. Eine auf diese Weise arbeitende Blasformmaschine ist aus der DE-OS 34 16 781 bekannt.

Während eines Ausstoßvorganges wird die Geschwindigkeit des Ausstoßkolbens durch Regelung der Position des Ausstoßkolbens bestimmt. Ein Kolbenstellglied verschiebt den Ausstoßkolben in Abhängigkeit vom Kolbenstellsignal eines Positionsreglers. Der Positionsregler erhält ein Vergleichssignal, das in einer Überlagerungsstufe durch Subtraktion der Istposition von der Sollposition gebildet ist. Die Sollposition wird dabei durch Integration aus einem vorgegebenen Geschwindigkeitssollwertprofil ermittelt. Das Geschwindigkeitssollwertprofil ist in eine bestimmte Anzahl von Segmenten eingeteilt, die verschiedene Positionen kennzeichnen. Von einem Segment zum anderen kann eine Änderung der Geschwindigkeit stattfinden. Dieser durch das Profil vorgegebene Geschwindigkeitsverlauf entspricht dem Profil für die Wanddickensteuerung an der Austrittsöffnung.

Das Geschwindigkeitssollwertprofil wird für ein bestimmtes Volumen innerhalb des Speicherkopfes ermittelt. Bleibt das Volumen des Kunststoffes innerhalb des Speicherkopfes bei aufeinanderfolgenden Ausstoßvorgängen konstant, ergibt sich ein Vorformling (Referenzvorformling), der im wesentlichen die gleichen Merkmale, nämlich konstante Länge und konstantes Volumen, aufweist. Hierbei ist es erforderlich, daß der Zufluß von Kunststoff aus dem Extruder konstant bleibt. Ändert sich dieser Kunststoffzufluß, z.B. durch eine Änderung der Drehzahl des Extruders, ändert sich auch der ausgestoßene Schlauch.

Der Ausstoßvorgang kann erst beginnen, wenn der Speicherkopf mit thermoplastischem Kunststoff gefüllt (bis Sollfüllhöhe erreicht ist) und der Blasformvorgang zur Erzeugung eines Hohlkörpers abgeschlossen ist. Ist der Blasformvorgang noch nicht beendet, wird weiterhin Kunststoff in den Speicherkopf gefüllt, bis der Ausstoßvorgang nach Beendigung des Blasformvorganges beginnen kann. Der durch die Überfüllung des Speicherkopfes bedingte zusätzliche Kunststoffzufluß verursacht Veränderungen des Vorformlings. Die Profilierung des Vorformlings wird erst vorgenommen, wenn der zusätzliche Kunststoff als sogenannter "Vorschlauch" ausgestoßen ist. Es entsteht auch eine Wartezeit, wenn der Blasformvorgang abgeschlossen ist, aber der Speicherkopf noch nicht vollständig bis zur Sollfüllhöhe gefüllt ist. Bedingt durch die Wartezeit zwischen Abschluß des Blasformvorganges und Erreichen der Sollfüllhöhe im Speicherkopf und umgekehrt, ergibt sich ein Verlust von Material und eine Verminderung in der Anzahl der herzustellenden Hohlkörper pro Zeiteinheit (Kapazitätsverminderung).

Der Erfindung liegt daher die Aufgabe zugrunde, eine Blasformmaschine zum Blasformen von Hohlkörpern zu schaffen, bei welcher ein Verlust von Material vermindert und die Anzahl der herzustellenden Hohlkörper pro Zeiteinheit vergrößert wird, wobei der beim Ausstoßvorgang entstehende Vorformling weitgehend einem Referenzvorformling entspricht.

Diese Aufgabe wird bei einer Blasformmaschine der eingangs genannten Art dadurch gelöst, daß die Steuerschaltung
- das Vergleichssignal mit einem Zuflußsignal überlagert, welches der Volumenänderung durch den beim Ausstoßen der Füllung des Speicherkopfes aus dem Extruder nachfließenden Kunststoff entspricht,
- den am Ende eines Ausstoßvorganges ermittelten Zuflußsignalwert zur Korrektur eines Start- und Endpositionssollwertes beim nächsten Ausstoßvorgang verwendet und
- die Wartezeit zwischen Abschluß des Blasformvorganges und Erreichen der Sollfüllhöhe und umgekehrt durch Regelung der Drehzahl des Extruders verringert.

Bei der erfindungsgemäßen Blasformmaschine wird ein Vorformling erzeugt, der auch bei einer Änderung des Extruderzuflußes weitgehend dem Referenzvorformling entspricht. Das Geschwindigkeitssollwertprofil ist für ein konstantes Volumen im Speicherkopf ermittelt worden. Hierbei ist vorausgesetzt worden, daß ein konstanter Zufluß von thermoplastischem Kunststoff aus dem Extruder auftritt. Für dieses Geschwindigkeitssollwertprofil ist eine konstante Sollfüllhöhe, bei welcher der Ausstoßvorgang beginnt, und ein Sollpolster ermittelt worden, bei der der Ausstoßvorgang endet. Die Änderung des Zuflußes von Kunststoff aus dem Extruder wird durch ein Zuflußsignal kompensiert, das dem Vergleichssignal überlagert wird. Das Zuflußsignal ist für den Referenzvorformling vorgegeben. Es entspricht der Menge des thermoplastischen Kunststoffes, die während der Bildung eines Referenzvorformlings in den Speicherkopf fließt. Dieses Zuflußsignal beeinflußt die Sollposition des Ausstoßkolbens so, daß der vom Extruder zusätzlich oder weniger eingeflossene Kunststoff während des Ausstoßvorganges nicht das Volumen des Vorformlings ändern kann. Es wird nur der Kunststoff ausgestoßen, der dem Volumen des Referenzvorformlings entspricht. Am Ende des Ausstoßvorganges erreicht der Ausstoßkolben ohne eine Korrektur des Start- und Endpositionssollwertes nicht das Sollpolster. Der Start- und Endpositionssollwert entspricht beim Referenzvorformling der Sollfüllhöhe und dem Sollpolster. Daher wird der Wert des Zuflußsignals am Ende eines Ausstoßvorganges zur Korrektur des Start- und Endpositionssollwertes für den nächsten Ausstoßvorgang verwendet. Durch diese Maßnahmen wird erreicht, daß der Vorformling weitgehend dem Referenzvorformling entspricht und das Sollpolster eingehalten wird. Der restliche Kunststoff im Speicherkopf (Polster) bleibt konstant und die Verweilzeit des Kunststoffes ebenfalls. Dies ermöglicht reproduzierbare Vorformlinge herzustellen.

Die Wartezeitverringerung zwischen Abschluß des Blasformvorganges und Erreichen der Sollfüllhöhe und umgekehrt wird erreicht durch eine Drehzahlveränderung des Extruders. Dadurch wird in den Speicherkopf mehr oder weniger thermoplastischer Kunststoff eingefüllt. Eine Erhöhung der Drehzahl ist notwendig, wenn der Blasformvorgang abgeschlossen ist, aber die Sollfüllhöhe im Speicherkopf noch nicht erreicht worden ist. Eine Verminderung der Drehzahl des Extruders ist im umgekehrten Fall erforderlich, wenn die Sollfüllhöhe erreicht worden ist, aber der Blasformvorgang noch nicht beendet ist.

In einer ersten Ausführungsform der Erfindung ist vorgesehen, daß die Steuerschaltung
- die Ist-Wartezeit mißt,
- ein Differenzsignal zwischen einer Soll-Wartezeit von Null und einer Ist-Wartezeit bildet und
- aus dem Differenzsignal durch Integration ein Drehzahlstellsignal für ein Extruderstellglied zur Stellung der Drehzahl erzeugt.

Hierbei wird erreicht, daß die Wartezeit gleich Null wird. Die Wartezeit wird so definiert, daß sie positiv ist, wenn die Sollfüllhöhe erreicht ist, aber der Blasformvorgang noch nicht abgeschlossen ist. Im umgekehrten Fall ist die Wartezeit negativ. Die Steuerschaltung erhält ein Meßsignal für die Position des Ausstoßkolbens von einem Positionsgeber; das Ende des Blasformvorganges wird der Steuerschaltung von einer Blasformsteuerschaltung geliefert.

Das Zuflußsignal wird in der Steuerschaltung aus dem Drehzahlstellsignal durch Integration gebildet. Da das Volumen proportional dem pro Zeiteinheit integrierten Fluß des Kunststoffes ist, der Fluß aber proportional der Drehzahl und die Drehzahl wiederum proportional dem Drehzahlstellsignal ist, ergibt sich durch Integration aus dem Drehzahlstellsignal das Zuflußsignal. Bei jedem neuen Ausstoßvorgang muß der Integrator auf Null gesetzt werden, da die zugeführte Menge des Kunststoffes bei Beginn des Ausstoßvorganges gleich Null ist.

Die Start- und Endpunkte des Geschwindigkeitssollwertprofils werden durch den vorgegebenen Startpositionsollwert und den vorgegebenen Endpositionssollwert des Ausstoßkolbens bestimmt. Erreicht der Ausstoßkolben den Startpositionssollwert und ist der Blasformvorgang abgeschlossen, wird das Geschwindigkeitssollwertprofil ausgegeben; es endet, wenn der Endpositionssollwert erreicht ist. Zur Korrektur des durch das Zuflußsignal verkürzten Weges des Ausstoßkolbens subtrahiert die Steuerschaltung den am Ende eines Ausstoßvorgangs gemessenen Zuflußsignalwert von einer vorgegebenen Sollfüllhöhe und von einem vorgegebenen Sollpolster, wobei die berechneten Werte den Start- und Endpositionssollwert für den nächsten Ausstoßvorgang darstellen.

Eine Regelung des Ausstoßkolbens wird zwischem dem Start des Ausstoßvorganges und Erreichen des Endpositionssollwertes vorgenommen. Hierbei ist vorgesehen, daß ein Kolbenstellglied den Ausstoßkolben in Abhängigkeit vom Kolbenstellsignal zur Regelung des Ausstoßkolbens stellt. Nach Erreichen des Endpositionssollwertes bewirkt das Kolbenstellglied durch ein Rückstellsignal von der Steuerschaltung ein Umkehren des Ausstoßkolbens in seine Startposition durch Füllung des Speicherkopfes aus dem Extruder.

Die Steuerschaltung kann als Digitalrechenanordnung (Mikrocomputer) oder mittels diskreter Bauelemente realisiert werden. Für die Erzeugung des Drehzahlstellsignals mittels diskreter Bauelemente ist vorgesehen, daß die Steuerschaltung einen Integralregler enthält, der aus dem in einer Vergleichsstufe gebildeten Differenzsignal das Drehzahlstellsignal für das Extruderstellglied erzeugt. Des weiteren enthält die Steuerschaltung einen ersten Integrator zur Bildung des Zuflußsignals aus dem Drehzahlstellsignal für das Extruderstellglied.

Ferner enthält die Steuerschaltung noch eine Auswerteschaltung, welche
- den Start- und Endpositionssollwert ermittelt,
- den Start des Ausstoßkolbens veranlaßt und
- die Wartezeit mißt.

Eine weitere von der Auswerteschaltung gesteuerte Schaltung liefert das Geschwindigkeitssollwertprofil. Ein nachgeschalteter zweiter Integrator integriert die Geschwindigkeitssollwerte, welche einer Überlagerungsstufe zugeführt werden, in der die Differenz zwischen Ist- und Sollposition und die Überlagerung von Vergleichs- und Zuflußsignal gebildet wird. Das von der Steuerschaltung gelieferte Kolbenstellsignal wird von einem Positionsregler erzeugt, welcher das von der Überlagerungsstufe gebildete Signal erhält.

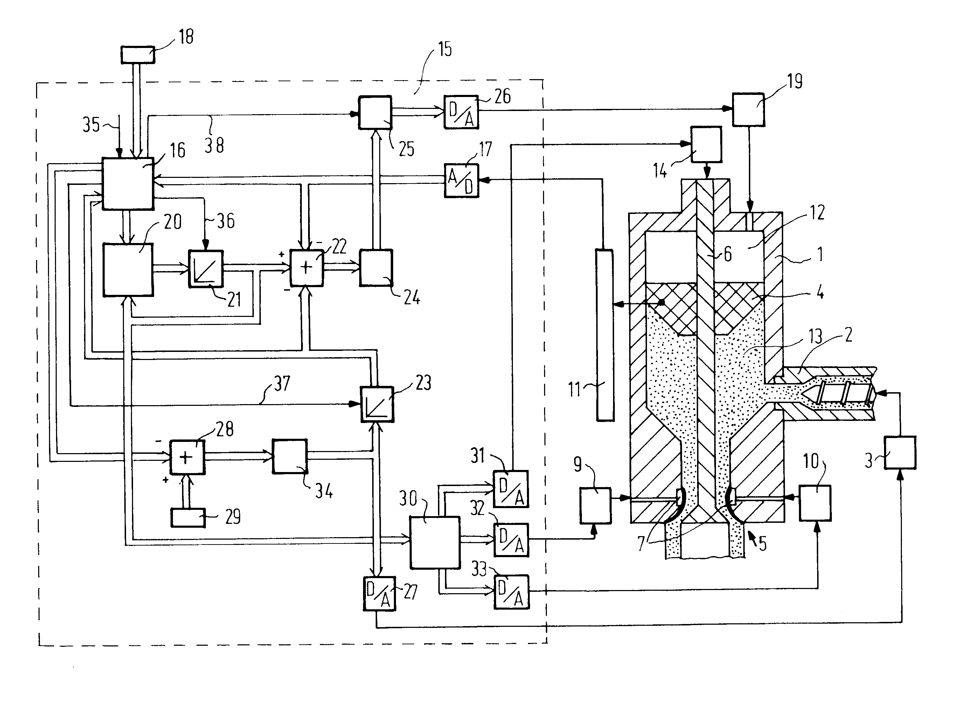

Ein Ausführungsbeispiel der Erfindung wird nachstehend anhand der Zeichnung näher erläutert.

Die in der einzigen Figur schematisch dargestellte Blasformmaschine enthält einen Speicherkopf 1, welcher diskontinuierlich aus thermoplastischem Kunststoff 13 Vorformlinge erzeugt. Eine hier nicht näher dargestellte Blasform dient zur Pressung der Vorformlinge zu Hohlkörpern. Der thermoplastische Kunststoff 13 wird von einem Extruder 2 geliefert, der von einem Extruderstellglied 3 gesteuert wird. Das Extruderstellglied 3 stellt die Drehzahl des Extruders ein und bestimmt damit den Fluß des in den Speicherkopf 1 fließenden thermoplastischen Kunststoffes 13. Der vom Extruder 2 in den zylinderförmigen Speicherkopf 1 eingetretene thermoplastische Kunststoff 13 wird, sobald er in ausreichender Menge gespeichert ist, von einem Ausstoßkolben 4 durch eine ringspaltförmige Austrittsöffnung 5 herausgepreßt. Die Spaltweite wird durch einen Dorn 6 stetig verstellt. Die Wanddicke eines Vorformlings kann noch mittels eines flexiblen Düsenringes 7 durch mehrere Stellglieder partiell verstellt werden (partielle Wand-Dicken-Verstellung). In der Zeichnung wird als Beispiel der Düsenring 7 durch zwei Wanddickenstellglieder 9 und 10 verstellt. Der Dorn 6 wird von einem Dornstellglied 14 verstellt.

Die Position des Ausstoßkolbens 4, der von einem Kolbenstellglied 19 (Hyraulikstellglied) betätigt wird, wird mittels eines Positionsgebers 11 gemessen. Das Herauspressen des thermoplastischen Kunststoffes 13 mittels des Ausstoßkolbens 4 aus der ringspaltförmigen Austrittsöffnung 5 wird durch eine Hydrauliköleinfüllung in den Hohlraum 12 des Speicherkopfes 1 bewerkstelligt, der nicht mit thermoplastischem Kunststoff 13 gefüllt ist. Wenn der Ausstoßvorgang beendet ist, fließt das Hydrauliköl aus dem Hohlraum 12 wieder heraus, und der Ausstoßkolben 4 wird durch den vom Extruder 2 gelieferten thermoplastischen Kunststoff 13 in seine Startposition gehoben.

Geregelt bzw. gesteuert wird der Speicherkopf 1 von einer Steuerschaltung 15, die aus diskreten digitalen Bauelementen aufgebaut ist. Die Steuerschaltung 15 enthält eine Auswerteschaltung 16, welcher die vom Positionsgeber 11 ermittelte Istposition des Ausstoßkolbens 4 über einen Analog-Digital-Umsetzer 17 geliefert wird. Über eine Eingabeeinheit 18 werden der Auswerteschaltung 16 die Sollfüllhöhe und das Sollpolster eingegeben. Der Ausstoßvorgang kann erst beginnen, wenn die Sollfüllhöhe erreicht ist, und endet genau dann, wenn das Sollpolster erreicht ist. Das Sollpolster stellt den restlichen im Speicherkopf 1 verbleibenden Kunststoff 13 am Ende eines Ausstoßvorganges dar. Die Auswerteschaltung 16 erhält noch ein Zustandssignal über eine Leitung 35 von einer Blasformsteuerschaltung, die angibt, ob die Blasform bereit ist, einen neuen Vorformling aufzunehmen. Des weiteren erhält die Auswerteschaltung am Ende eines Ausstoßvorganges einen Zuflußsignalwert.

Stellt die Auswerteschaltung 16 fest, daß die Blasform zur Aufnahme eines neuen Vorformlings bereit und die Sollfüllhöhe erreicht ist, wird einer Schaltung 20 ein Startsignal gegeben, woraufhin diese ein Geschwindigkeitssollwertprofil ausgibt. Der Schaltung 20 ist vor Beginn des Ausstoßvorganges der Start- und Endpositionssollwert von der Auswerteschaltung 16 zugeführt worden. Das Geschwindigkeitssollwertprofil stellt die Geschwindigkeit des Ausstoßkolbens in Abhängigkeit von der Position des Ausstoßkolbens 4 zwischen Sollfüllhöhe und Sollpolster für einen Referenzvorformling dar. Der Startpositionssollwert für den Referenzvorformling ist die Sollfüllhöhe und der Endpositionssollwert das Sollpolster. Das Geschwindigkeitssollwertprofil ist in einzelne Segmente eingeteilt, die verschiedene Positionen kennzeichnen. Von Segment zu Segment ändert sich die Geschwindigkeit linear. Die ausgegebenen Geschwindigkeitssollwerte werden in einem Integrator 21 integriert und als Sollposition einer Überlagerungsstufe 22 zugeführt. Die vom Integrator 21 gelieferte Sollposition wird zur Schaltung 20 rückgekoppelt und dient dazu, das Geschwindigkeitssollwertprofil in Abhängigkeit von der Sollposition umzuschalten. Stellt die Schaltung 20 fest, daß der Endpositionssollwert erreicht ist, wird die Ausgabe des Geschwindigkeitssollwertprofils beendet. Der Integrator 21 wird von der Auswerteschaltung 16 über die Leitung 36 vor Beginn eines Ausstoßvorganges auf Istposition gesetzt.

Der Überlagerungsstufe 22 wird außerdem die Istposition vom Analog-Digital-Umsetzer 17 und von einem weiteren Integrator 23 ein Zuflußsignal zugeführt. Das Zuflußsignal wird durch Integration des Drehzahlstellsignals im Integrator 23 für das Extruderstellglied 3 gebildet. In der Überlagerungsstufe 22 wird das Zuflußsignal und die Istposition von der Sollposition subtrahiert. Das aus der Subtraktion entstandene Signal wird einem Positionsregler 24 geliefert, der ein Kolbenstellsignal erzeugt, welches über eine Rückstellschaltung 25 und einen Digital-Analog-Umsetzer 26 auf das Kolbenstellglied 19 gegeben wird. Von der Auswerteschaltung 16 wird über eine Leitung 38 der Rückstellschaltung 25 ein Signal zugeführt, welches bewirkt, daß zu Beginn des Ausstoßvorganges dem Kolbenstellglied 19 das Kolbenstellsignal zugeführt wird.

Am Ende des Ausstoßvorganges wird das Kolbenstellglied 19 so geschaltet, daß der Ausstoßkolben 4 durch die Füllung des Speicherkopfes 1 mit thermoplastischen Kunststoff in seine Startposition zurückkehrt.

Der Referenzvorformling ist für ein bestimmtes Volumen innerhalb des Speicherkopfes 1 und einen bestimmten Zufluß von Kunststoff aus dem Extruder 2 während des Ausstoßvorganges ermittelt worden. Da während des Ausstoßvorganges der vom Extruder 2 gelieferte Kunststoff sich ändern kann, muß die Sollposition dann kompensiert werden, um einen Vorformling zu erzeugen, der dem Referenzvorformling entspricht. Das Volumen des Kunststoffes, das während des Ausstoßvorganges zusätzlich oder weniger in den Speicherkopf 1 hineinfließt, ist proportional dem pro Zeiteinheit integrierten Zufluß des Kunststoffes. Dieser Fluß ist wiederum proportional der Drehzahl und die Drehzahl proportional dem Drehzahlstellsignal. Durch Integration des Drehzahlstellsignals im Integrator 23 ergibt sich also das Zuflußsignal, das dem einfließenden Volumen während des Ausstoßvorganges entspricht. Der Integrator 23 wird vor Beginn eines Ausstoßvorganges von der Auswerteschaltung 16 über die Leitung 37 durch ein Rücksetzsignal auf Null gesetzt.

Am Ende des Ausstoßvorganges erreicht der Ausstoßkolben 4 nicht mehr das Sollpolster, da es zusätzlich um das Volumen des während des Ausstoßvorganges vom Extruder 2 gelieferten Kunststoffes erhöht ist. Um zu ermöglichen, daß der Ausstoßkolben das Sollpolster erreicht, wird der Zuflußsignalwert am Ende eines Ausstoßvorganges der Auswerteschaltung 16 zugeführt, der zur Korrektur des Start- und Endpositionssollwertes dient. In der Auswerteschaltung 16 wird die Sollfüllhöhe und das Sollpolster um den Zuflußsignalwert vermindert. Diese neuen berechneten Werte dienen als Start- bzw. Endpositionssollwert und werden der Schaltung 20 zugeführt.

Ein neuer Ausstoßvorgang kann nur unter der Bedingung beginnen, daß die Blasform bereit zur Aufnahme eines neuen Vorformlings ist und daß der Ausstoßkolben 4 Sollfüllhöhe erreicht hat. Ist der Blasformvorgang noch nicht beendet aber der Speicherkopf 1 schon genügend gefüllt, beginnt der Ausstoßvorgang, wenn der Blasformvorgang beendet ist. Der dabei entstehende zusätzliche Kunststoff wird als sogenannter "Vorschlauch" vor Beginn der Bildung des Vorformlings herausgepreßt. Hierdurch entsteht ein Verlust von Kunststoffmaterial. Das Geschwindigkeitssollwertprofil kann erst bei Erreichen des Startpositionssollwertes beginnen. Den Start des Ausstoßvorganges bewirkt die Auswerteschaltung 16. Die Schaltung 20 gibt vor Erreichen des Startpositionssollwertes einen konstanten Geschwindigkeitssollwert aus (erster Profilwert für den Vorschlauch). Bei Erreichen des Startpositionssollwertes schaltet die Schaltung 20 auf das Geschwindigkeitssollwertprofil um und beginnt mit der Ausgabe der Sollwerte.

Andererseits ist es auch möglich, daß der Blasformvorgang beendet und die Sollfüllhöhe im Speicherkopf 1 noch nicht erreicht ist. Um die Wartezeit zwischen Abschluß des Blasformvorganges und Erreichen der Sollfüllhöhe und umgekehrt im Speicherkopf 1 zu Null zu machen, ist ein Integralregler 34 vorgesehen, der das Drehzahlstellsignal erzeugt, welches dem Integrator 23 und über einen Digital-Analog-Umsetzer 27 dem Extruderstellglied 3 zugeführt wird. Der Integralregler 34 erhält ein Differenzsignal von einer Vergleichsstufe 28, die einen Vergleich zwischen der Soll-Wartezeit und der Ist-Wartezeit durchführt. Die Soll-Wartezeit von Null wird von einem Speicherglied 29 geliefert. Die Ist-Wartezeit wird in der Auswerteschaltung 16 durch Messung der Zeit zwischen Beendigung des Blasformvorganges und Erreichen der Sollfüllhöhe und umgekehrt ermittelt. Ist die Sollfüllhöhe erreicht bevor der Blasformvorgang beendet ist, so ist die Wartezeit positiv. Ist der Blasformvorgang beendet bevor die Sollfüllhöhe erreicht ist, so ist die Wartezeit negativ. Durch diesen Integralregler 34 wird die Wartezeit zu Null reduziert. Untersuchungen haben gezeigt, daß der Regelkreis stabil ist.

Die Wanddickenstellglieder 9 und 10 und das Dornstellglied 14 werden von einer Schaltung 30 gesteuert, welche die jeweiligen Sollwerte (Wandstärkesollwertprofile) über Digital-Analog-Umsetzer 31, 32 und 33 für die Dornstellung und die Wanddicken in Abhängigkeit von der Sollposition liefert.

## Patentansprüche

1. Blasformmaschine zum Blasformen von Hohlkörpern mit einem Speicherkopf (1), der mit einem Kunststoff (13) liefernden Extruder (2) verbunden ist und aus dem im gefüllten Zustand ein Ausstoßkolben (4) den Kunststoff durch eine ringspaltförmige Austrittsöffnung (5) zur Erzeugung eines Vorformlings preßt,
mit einer Blasform zur Bildung eines Hohlkörpers aus dem Vorformling und
mit einer Steuerschaltung (15), die nach Abschluß eines Blasformvorganges und der Füllung des Speicherkopfes ein Kolbenstellsignal zur Regelung der Position des Ausstoßkolbens aus einem Vergleichssignal ableitet, welches aus der Differenz zwischen Istposition und Sollposition des Ausstoßkolbens gebildet ist, wobei die Sollposition durch Integration aus einem vorgegebenen Geschwindigkeitssollwertprofil ermittelt wird,
dadurch gekennzeichnet, daß die Steuerschaltung (15)
- das Vergleichssignal mit einem Zuflußsignal überlagert, welches der Volumenänderung durch den beim Ausstoßen der Füllung des Speicherkopfes (1) aus dem Extruder (2) nachfließenden Kunststoff entspricht,
- den am Ende eines Ausstoßvorganges ermittelten Zuflußsignalwert zur Korrektur eines Start- und Endpositionssollwertes beim nächsten Ausstoßvorgang verwendet und
- die Wartezeit zwischen Abschluß des Blasformvorganges und Erreichen der Sollfüllhöhe und umgekehrt durch Regelung der Drehzahl des Extruders verringert.

2. Blasformmaschine nach Anspruch 1,
dadurch gekennzeichnet, daß die Steuerschaltung (15)
- die Ist-Wartezeit mißt,
- ein Differenzsignal zwischen einer Soll-Wartezeit von Null und einer Ist-Wartezeit bildet und
- aus dem Differenzsignal durch Integration ein Drehzahlstellsignal für ein Extruderstellglied (3) zur Stellung der Drehzahl erzeugt.

3. Blasformmaschine nach Anspruch 2,
dadurch gekennzeichnet, daß die Steuerschaltung (15) aus dem Drehzahlstellsignal durch Integration das Zuflußsignal bildet.

4. Blasformmaschine nach Anspruch 3,
dadurch gekennzeichnet, daß die Steuerschaltung (15) den am Ende eines Ausstoßvorganges gemessenen Zuflußsignalwert von einer vorgegebenen Sollfüllhöhe und von einem vorgegebenen Sollpolster subtrahiert und die berechneten Werte den Start- und Endpositionssollwert für den nächsten Ausstoßvorgang darstellen.

5. Blasformmaschine nach Anspruch 4,
dadurch gekennzeichnet, daß ein Kolbenstellglied (19) den Ausstoßkolben (4) in Abhängigkeit vom Kolbenstellsignal zur Regelung der Position des Ausstoßkolbens stellt und daß das Kolbenstellglied durch ein Rückstellsignal von der Steuerschaltung (15) nach Erreichen des Endpositionssollwertes ein Umkehren des Ausstoßkolbens in seine Startposition durch Füllung des Speicherkopfes (1) aus dem Extruder (2) bewirkt.

6. Blasformmaschine nach einem der Ansprüche 2 bis 5,
dadurch gekennzeichnet, daß die Steuerschaltung (15) einen Integralregler (34) enthält, der aus dem in einer Vergleichsstufe (28) gebildeten Differenzsignal das Drehzahlstellsignal für das Extruderstellglied (3) erzeugt.

7. Blasformmaschine nach Anspruch 6,
dadurch gekennzeichnet, daß die Steuerschaltung (15) einen ersten Integrator (23) zur Bildung des Zuflußsignals aus dem Drehzahlstellsignal für das Extruderstellglied (3) enthält.

8. Blasformmaschine nach Anspruch 7,
dadurch gekennzeichnet, daß die Steuerschaltung (15) eine Auswerteschaltung (16), welche
- den Start- und Endpositionssollwert ermittelt,
- den Start des Ausstoßkolbens (4) veranlaßt und
- die Wartezeit mißt,
eine von der Auswerteschaltung gesteuerte Schaltung (20) zur Lieferung des Geschwindigkeitssollwertprofils, einen zweiten Integrator (21) zur Integration der Geschwindigkeitssollwerte, eine Überlagerungsstufe (22), in der die Differenz zwischen Ist- und Sollposition und die Überlagerung von Vergleichs- und Zuflußsignal gebildet wird, und einen Positionsregler (24) enthält, welcher aus dem von der Überlagerungsstufe gebildeten Signal das Kolbenstellsignal erzeugt.

## Claims

1. A blowmoulding machine for the blowmoulding of hollow articles, comprising an accumulator head (1) which is connected to an extruder (2) supplying a synthetic material (13), and wherefrom, in the filled condition, a discharge piston (4) drives the synthetic material through an annular slit-shaped discharge opening (5) so as to produce a preform,
comprising a blowmould for forming a hollow article from the preform, and
comprising a control circuit (15) which, after completion of a blowmoulding sequence and the filling of the accumulator head, derives a piston adjusting signal for controlling the position of the discharge piston from a comparison signal formed from the difference between the actual position and the reference position of the discharge piston, the reference position being determined by integration from a predetermined speed reference value profile,
characterized in that the control circuit (15)
- superimposes an influx signal on the comparison signal, which influx signal corresponds to the change in volume due to the afterflow of synthetic material from the extruder (2) upon discharging of the contents of the accumulator head (1),
- uses the influx signal value determined at the end of a discharge step to correct a reference value for an initial position and a final position for the next discharge step, and
- reduces the waiting time between the completion of the blowmoulding sequence and the reaching of the reference filling level and vice versa by controlling the rotational speed of the extruder (2).

2. A blowmoulding machine as claimed in Claim 1,
characterized in that the control circuit (15)
- measures the actual waiting time,
- forms a difference signal between a reference waiting time zero and an actual waiting time, and
- generates a rotational speed adjusting signal for an extruder adjusting member (3) for adjusting the rotational speed by integration from the difference signal.

3. A blowmoulding machine as claimed in Claim 2,
characterized in that the control circuit (15) forms the influx signal from the rotational speed adjusting signal by integration.

4. A blowmoulding machine as claimed in Claim 3,
characterized in that the control circuit (15) subtracts the influx signal value measured at the end of a discharge step from a predetermined reference filling level and from a predetermined reference cushion, the calculated values representing the reference value for the initial position and the final position for the next discharge step.

5. A blowmoulding machine as claimed in Claim 4,
characterized in that a piston adjusting member (19) positions the discharge piston (4) in dependence on the piston adjusting signal in order to control the position of the discharge piston, and in that, after the reference value for the final position has been reached, the piston adjusting member returns, via a reset signal from the control circuit (15), the discharge piston to its initial position by filling the accumulator head (1) from the extruder (2).

6. A blowmoulding machine as claimed in any one of Claims 2 to 5,
characterized in that the control circuit (15) includes an integral controller (34) which generates the rotational speed adjusting signal for the extruder adjusting member (3) from the difference signal formed in a comparison stage (28).

7. A blowmoulding machine as claimed in Claim 6,
characterized in that the control circuit (15) includes a first integrator (23) for forming the influx signal from the rotational speed adjusting signal for the extruder adjusting member (3).

8. A blowmoulding machine as claimed in Claim 7,
characterized in that the control circuit (15) includes an evaluation circuit (16) which
- determines the reference value for the initial position and the final position,
- initiates the start of the discharge piston (4), and
- measures the waiting time,
a circuit (20) which is controlled by the evaluation circuit so as to supply the speed reference value profile, a second integrator (21) for integration of the speed reference values, a superimposition stage (22) in which the difference between the actual position and the reference position and the superimposition of the comparison signal and the influx signal is formed, and a position controller (24) which generates the piston adjusting signal from the signal formed by the superimposition stage.

## Revendications

1. Machine de soufflage de corps creux comportant :
- une tête de stockage (1) qui est raccordée à une extrudeuse (2) débitant une matière plastique (13) et hors de laquelle, lorsqu'elle est remplie, un piston d'éjection (4) refoule la matière plastique à travers une ouverture de sortie en forme de fente annulaire (5) pour produire une ébauche,
- un moule de soufflage pour former un corps creux à partir de l'ébauche, et
- un circuit de commande (15) qui, une fois terminée une opération de soufflage, délivre un signal de position du piston pour régler la position du piston d'éjection à partir d'un signal de comparaison, lequel signal est formé de la différence entre la position réelle et la position théorique du piston d'éjection, la position théorique étant calculée par intégration à partir d'un profil prédéterminé des valeurs théoriques de la vitesse,
caractérisée en ce que le circuit de commande (15) :
- superpose le signal de comparaison à un signal d'alimentation, qui correspond à la variation de volume de matière plastique s'écoulant de l'extrudeuse (2) lors de l'éjection de la charge de la tête de stockage (1),
- utilise la valeur du signal d'alimentation captée à la fin d'une opération d'éjection pour corriger une valeur théorique de la position de départ et de la position finale dans l'opération d'éjection suivante, et
- réduit le temps d'attente entre le moment où l'opération de soufflage est terminée et le moment où la hauteur de remplissage théorique est atteinte et vice versa par réglage du nombre de tours de l'extrudeuse.

2. Machine de soufflage selon la revendication 1, caractérisée en ce que le circuit de commande (15) :
- mesure le temps d'attente réel,
- forme un signal différentiel entre un temps d'attente théorique de zéro et un temps d'attente réel, et
- produit à partir du signal différentiel par intégration un signal de réglage du nombre de tours pour un élément de réglage de l'extrudeuse (3) afin de régler le nombre de tours.

3. Machine de soufflage selon la revendication 2, caractérisée en ce que le circuit de commande (15) forme le signal d'alimentation par intégration à partir du signal de réglage du nombre de tours.

4. Machine de soufflage selon la revendication 3, caractérisée en ce que le circuit de commande (15) soustrait la valeur du signal d'alimentation mesurée à la fin d'une opération d'éjection d'une hauteur de remplissage théorique prédéfinie et d'un volume résiduel théorique prédéfini, les valeurs calculées représentant les valeurs théoriques de la position de départ et de la position finale pour l'opération d'éjection suivante.

5. Machine de soufflage selon la revendication 4, caractérisée en ce qu'un élément de réglage du piston (19) positionne le piston d'éjection (4) en fonction du signal de réglage du piston pour régler la position du piston d'éjection et effectue, une fois que la valeur théorique de la position finale a été atteinte, grâce à un signal de rappel du circuit de commande (15), un déplacement en sens inverse du piston d'éjection dans sa position de départ par remplissage de la tête de stockage (1) par l'extrudeuse (2).

6. Machine de soufflage selon l'une quelconque des revendications 2 à 5, caractérisée en ce que le circuit de commande (15) contient un régulateur d'intégration (34) qui produit le signal de réglage du nombre de tours pour l'élément de réglage de l'extrudeuse (3) à partir du signal différentiel formé par un étage de comparaison (28).

7. Machine de soufflage selon la revendication 6, caractérisée en ce que le circuit de commande (15) contient un premier intégrateur (23) pour former le signal d'alimentation à partir du signal de réglage du nombre de tours pour l'élément de réglage de l'extrudeuse (3).

8. Machine de soufflage selon la revendication 7, caractérisée en ce que le circuit de commande (15) comporte, en outre, un circuit d'évaluation (16) qui :
- calcule les valeurs théoriques de la position de départ et de la position finale,
- autorise le démarrage du piston d'éjection (4), et
- mesure le temps d'attente,
un circuit (20) commandé par le circuit d'évaluation pour fournir le profil des valeurs théoriques de la vitesse, un second intégrateur (21) pour intégrer les valeurs théoriques de la vitesse, un étage de superposition (22), dans lequel on forme la différence entre la position réelle et la position théorique ainsi que la superposition du signal de comparaison et du signal d'alimentation et un régulateur de position (24) qui produit le signal de réglage du piston à partir du signal formé par l'étage de superposition.
